# EUROPÄISCHE PATENTANMELDUNG

(11) **EP 4 674 737 A1**
(43) Veröffentlichungstag der Anmeldung: **07.01.2026**
(21) Anmeldenummer: 24185920.6
(22) Anmeldetag: 02.07.2024
(51) Int. Cl.: B62J 6/01, B62J 6/028, B62J 6/045, B62J 6/055, B62J 6/16, B62K 21/26

(54) **LEUCHTEN-BAUGRUPPE ZUR MONTAGE AN EINEM FAHRRAD UND ZUR REALISIERUNG EINER LEUCHTENFUNKTION UND LEUCHTENSYSTEM MIT ZWEI SOLCHER LEUCHTEN-BAUGRUPPEN**

(71) Anmelder: motogadget GmbH, 13053 Berlin (DE)
(72) Erfinder: Keller, Garrit, 13053 Berlin (DE)
(74) Vertreter: Wörz, Volker Alfred

(57) **Zusammenfassung**

Die Erfindung betrifft eine Leuchten-Baugruppe (40), die zur Montage an einem Fahrrad, insbesondere an einem E-Bike, und zur Realisierung einer Leuchtenfunktion oder eines Teils davon ausgebildet ist. Es wird vorgeschlagen, dass die Leuchten-Baugruppe (40) einen zur Montage an einem Lenkerende eines Lenkerrohrs (32) des Fahrrads vorgesehenen Lenkergriff (31), eine Leuchte (62) mit mindestens einer Lichtquelle (5, 5a), insbesondere einer Halbleiterlichtquelle, eine Steuerelektronik (16) zur Ansteuerung der Lichtquelle (5, 5a) und zur Realisierung der Leuchtenfunktion und ein Bedienelement (28), insbesondere einen Taster, zur Ansteuerung der mindestens einen Lichtquelle (5, 5a) als integrale Einheit umfasst und zur Montage an dem Lenkerende als Einheit (33, 33a) ausgebildet ist.

## Beschreibung

Die vorliegende Erfindung betrifft eine Leuchten-Baugruppe, die zur Montage an einem Fahrrad, insbesondere an einem E-Bike, und zur Realisierung einer Leuchtenfunktion oder eines Teils davon ausgebildet ist.

Die Erfindung betrifft außerdem ein Leuchtensystem, das zur Montage an einem Fahrrad, insbesondere an einem E-Bike, und zur Realisierung einer Leuchtenfunktion ausgebildet ist, wobei das Leuchtensystem zwei der Leuchten-Baugruppen umfasst.

In den letzten Jahrzehnten hat das Fahrrad eine bedeutende Renaissance als bevorzugtes Verkehrsmittel insbesondere in urbanen Gebieten erlebt. Mit wachsendem Umweltbewusstsein und dem Streben nach nachhaltigen Mobilitätslösungen ist das Fahrrad zum Symbol für umweltfreundliche Fortbewegung geworden. Die Einführung des elektrisch angetriebenen bzw. unterstützen Fahrrads (E-Bike) hat diesen Trend weiter verstärkt, indem es auch längere Strecken und hügelige Gebiete für Fahrräder erschließt und damit eine breitere Bevölkerungsgruppe anspricht.

Gerade wegen dieser positiven Entwicklungen ist die Sicherheit der Radfahrer in zunehmendem Maße ein zentrales Anliegen. Besonders in dicht befahrenen urbanen Gebieten ist eine klare und sichtbare Kommunikation von Richtungsänderungen von großer Bedeutung, um Unfälle zu vermeiden und einen gleichmäßigen Verkehrsfluss zu gewährleisten. Hier setzt die vorliegende Erfindung an.

In Deutschland waren Fahrtrichtungsanzeiger für Fahrräder lange Zeit aufgrund gesetzlicher Vorschriften verboten. Die Straßenverkehrsordnung (StVO) sah keine explizite Regelung für solche Fahrtrichtungssignale an Fahrrädern vor, weshalb die Nutzung von Fahrtrichtungsanzeigern für Fahrräder nicht erlaubt war. Dies führte dazu, dass Radfahrer ihre Richtungswechsel traditionell mit Handzeichen anzeigen mussten, was insbesondere bei Dunkelheit oder schlechten Sichtverhältnissen problematisch war. Auch unter Sicherheitsaspekten war dies problematisch, da der Fahrer des Fahrrads eine Hand vom Lenker nehmen musste und das Fahrrad nur noch mit der anderen Hand lenken konnte.

Mit dem zunehmenden Einsatz von Fahrrädern und E-Bikes insbesondere in städtischen Gebieten und dem wachsenden Bewusstsein für die Notwendigkeit einer verbesserten Verkehrssicherheit, hat sich die gesetzliche Lage in Deutschland jedoch geändert. Die StVO wurde dahingehend angepasst, dass nun auch Fahrräder und E-Bikes mit Blinkern ausgestattet sein dürfen. Diese Änderung ist ein bedeutender Schritt in Richtung einer besseren Integration von Fahrrädern in den Straßenverkehr und einer Erhöhung der Sicherheit für alle Verkehrsteilnehmer, aktiv, da der Fahrradfahrer selbst bei der Anzeige einer Fahrtrichtungsänderung stets beide Hände am Lenker behalten kann, und passiv, da die anderen Verkehrsteilnehmer nun einen klar verständlichen eindeutigen Hinweis auf eine Fahrtrichtungsänderung eines Fahrrads erhalten.

Vorteil der Legalisierung von Fahrradblinkern ist die erhöhte Sicherheit. Fahrradblinker verbessern die Sichtbarkeit der Richtungsanzeige bei Tag und Nacht erheblich. Autofahrer und andere Verkehrsteilnehmer können dadurch schneller und klarer die Absichten des Radfahrers erkennen, was die Unfallgefahr insbesondere an Kreuzungen und Einmündungen reduziert.

Auch im Hinblick auf Komfort und Stabilität des Fahrradfahrers bringen Fahrradblinker Vorteile mit sich. Durch die Nutzung von Blinkern müssen Radfahrer nicht mehr eine Hand vom Lenker nehmen, um ein Handzeichen zu geben. Dies verbessert die Stabilität und Kontrolle über das Fahrrad, besonders bei schwierigen, bspw. kurvigen und/oder unebenen, Straßenverhältnissen oder hohen Geschwindigkeiten, insbesondere in Anbetracht der schnellen E-Bikes, die von einer stetig älter werdenden Nutzergruppe gefahren werden.

Mit der Einführung von standardisierten Blinkern für Fahrräder entsteht ein einheitliches Signalbild, das von allen Verkehrsteilnehmern verstanden wird. Dies trägt zu einer harmonischeren und sichereren Interaktion zwischen Fahrradfahrern und anderen Verkehrsteilnehmern im Straßenverkehr bei.

Die neuen gesetzlichen Regelungen legen auch die technischen Anforderungen für Fahrradblinker fest. Diese müssen beispielsweise eine bestimmte Leuchtstärke und Sichtbarkeit gewährleisten, um auch bei hellem Tageslicht und aus verschiedenen Blickwinkeln erkennbar zu sein. Zudem müssen sie robust und wetterfest sein, um den vielfältigen Umweltbedingungen standzuhalten, denen Fahrräder im täglichen Einsatz ausgesetzt sind.

Die Legalisierung von Fahrradblinkern in Deutschland stellt einen wichtigen Fortschritt in der Entwicklung sicherer urbaner Mobilität dar. Sie reflektiert die zunehmende Bedeutung des Fahrrads als nachhaltiges Verkehrsmittel und die Notwendigkeit, die Verkehrssicherheit für alle Beteiligten zu verbessern.

Die direkte Übertragung von bestehenden Zweirad-Blinkerkonzepten, wie sie bspw. bei motorisierten Rollern oder Motorrädern eingesetzt werden, auf das Fahrrad ginge mit erheblichem zusätzlichem Aufwand und hohen Kosten bei der Produktion und Montage am Fahrrad einher.

Weiterhin gelten bei der Auslegung von Fahrradkomponenten andere Schwerpunkte als bei motorisierten Rollern oder Motorrädern. Diese Schwerpunkte liegen insbesondere im Leichtbau und einer möglichst geringen Komplexität. So werden mittlerweile bspw. Kettenschaltwerke von Fahrrädern oder höhenverstellbare Sattelstützen kabellos per Funk gesteuert, um Gewicht und Komplexität zu reduzieren.

Bei einer Adaption von bestehenden, konventionellen Blinkersystemen für Motorräder an einen Einsatz in/an einem Fahrrad müssten folgende Komponenten zusätzlich am Fahrrad installiert werden bzw. die folgenden Maßnahmen getroffen werden:
- Blinkerleuchte mit Befestigungsteil vorne links am Fahrrad befestigen,
- Blinkerleuchte mit Befestigungsteil vorne rechts befestigen,
- Blinkerleuchte mit Befestigungsteil hinten links befestigen,
- Blinkerleuchte mit Befestigungsteil hinten rechts befestigen,
- Steuerelektronik (Blinkgeber) am Fahrrad befestigen,
- Bedienelement am Lenker zur Bedienung der Blinker am Fahrrad befestigen,
- Kabel von der Steuerelektronik zur Spannungsquelle verlegen und befestigen,
- Kabel vom Bedienelement zur Steuerelektronik verlegen und befestigen,
- Kabel vom Blinker vorne links zur Steuerelektronik verlegen und befestigen,
- Kabel vom Blinker vorne rechts zur Steuerelektronik verlegen und befestigen,
- Kabel vom Blinker hinten links zur Steuerelektronik verlegen und befestigen,
- Kabel vom Blinker hinten rechts zur Steuerelektronik verlegen und befestigen, und
- Vorhalten und Installieren von für die Installation benötigtem Befestigungs- und Kontaktierungsmaterial sowie von Kabelbindern und Haltewinkel.

Die Installation dieser zusätzlichen Komponenten geht - neben dem Mehrgewicht dieser Komponenten - mit einem erheblichen Zeitaufwand und damit einer Kostensteigerung bei der industriellen Produktion von Fahrrädern oder E-Bikes einher.

Weiterhin ist es einem Laien ohne technische Vorkenntnisse nicht möglich, ein derartiges konventionelles Blinkersystem an seinem Fahrrad oder E-Bike nachzurüsten. Alle derzeitig am Markt verfügbare Fahrradblinker basieren auf dem oben genannten konventionellem Ansatz.

Der vorliegenden Erfindung liegt die Aufgabe zugrunde, ein innovatives Leuchtensystem, insbesondere ein Blinkersystem, speziell für Fahrräder vorzuschlagen, das sowohl die Sicherheit als auch die Benutzerfreundlichkeit, insbesondere im Hinblick auf eine einfachere Installation am Fahrrad oder E-Bike, erhöht, indem es die Sichtbarkeit der Richtungsanzeige maximiert und somit einen wesentlichen Beitrag zur Verbesserung der Verkehrssicherheit leistet.

Zur Lösung dieser Aufgabe wird eine Leuchten-Baugruppe mit den Merkmalen des Anspruchs 1 sowie ein Leuchtensystem mit den Merkmalen des Anspruchs 14 vorgeschlagen. Insbesondere wird ausgehend von der Leuchten-Baugruppe der eingangs genannten Art vorgeschlagen, dass die Leuchten-Baugruppe eine Leuchte mit mindestens einer Lichtquelle, insbesondere einer Halbleiterlichtquelle, und eine Steuerelektronik, die zur Ansteuerung der Lichtquelle und zur Realisierung der Leuchtenfunktion ausgebildet ist, umfasst. Die Steuerelektronik ist bevorzugt integraler Bestandteil der Leuchte. Vorzugsweise ist die Steuerelektronik in der Form eines Mikrocontrollers oder Mikroprozessors auf einer Leiterplatte der Leuchte, welche auch die mindestens eine Lichtquelle trägt und kontaktiert, angeordnet und kontaktiert. Ferner umfasst die Leuchten-Baugruppe vorteilhafterweise einen zur Montage an einem Lenkerende eines Lenkerrohrs des Fahrrads vorgesehenen Lenkergriff. Die Leuchte, die Steuerelektronik sowie ein Bedienelement, insbesondere einen Taster, der zur Ansteuerung der mindestens einen Lichtquelle ausgebildet ist, sind als integrale Einheit zusammen mit dem Lenkergriff ausgebildet. Der Lenkergriff mit den daran befestigten bzw. damit integral ausgebildeten Leuchte, Steuerelektronik und Bedienelement ist zur Montage an dem Lenkerende als separat handhabbare integrale Einheit ausgebildet.

Ausgehend von dem Leuchtensystem der eingangs genannten Art wird vorgeschlagen, dass das Leuchtensystem zwei erfindungsgemäße Leuchten-Baugruppen umfasst, wobei eine der Leuchten-Baugruppen zur Montage als integrale Einheit an einem ersten Lenkerende eines Lenkerrohrs des Fahrrads und die andere Leuchten-Baugruppe zur Montage als integrale Einheit an einem dem ersten Lenkerende gegenüberliegenden zweiten Lenkerende des Lenkerrohrs ausgebildet ist.

Die erfindungsgemäße Lösung vereint die folgenden drei Haupt-Baugruppen in einer einzigen Leuchten-Baugruppen-Einheit:
- eine Leuchte umfassend die mindestens eine Lichtquelle - kann außerdem eine Hauptleiterplatte oder Steuerplatine, eine Optikbaugruppe, ein Leuchtengehäuse und eine Abdeckplatte auf der Optikbaugruppe umfassen,
- einen Lenkergriff - bevorzugt ausgebildet als 2-Komponenten Spritgussteil mit einem steifen Grundgehäuse zur festen Klemmung auf dem Lenkerrohr und einem weichen, gummiartigen Griffteil zur Verbesserung der Haptik und für eine optimale Ergonomie für den Radfahrer,
- ein Bedienelement, umfassend bspw. einen Drucktaster zur Betätigung durch den Radfahrer - kann eine flexible Leiterplatte, SMD- oder anderweitig bestückt mit einem Anschlussstecker zum Anschluss an eine Energiequelle des Fahrrads und/oder an eine entsprechende Leuchten-Baugruppe, die an einem gegenüberliegenden Ende des Lenkerrohrs befestigt ist, zur Synchronisation der durch die beiden an den gegenüberliegenden Enden des Lenkerrohrs befestigten Leuchten-Baugruppen erzeugten Leuchtenfunktionen umfassen, was nachfolgend noch genauer erläutert wird.

Die vorliegende Erfindung stellt eine innovative Leuchten-Baugruppe für Fahrräder und E-Bikes dar, die eine kompakte, kostengünstige und einfach zu montierende Lösung bietet. Die Leuchten-Baugruppe erhöht die Akzeptanz von Leuchtensystemen bei Fahrrad- und E-Bikefahrern und ermöglicht es gleichzeitig, die neuen gesetzlichen Möglichkeiten für Fahrtrichtungsanzeiger und andere Leuchtenfunktionen von Fahrrädern und E-Bikes voll auszuschöpfen sowie die Sicherheit und den Komfort für Radfahrer zu erhöhen.

Die erfindungsgemäße Leuchten-Baugruppe kann zur Realisierung von einer oder mehreren Leuchtenfunktionen oder von Teilen davon ausgebildet sein. Diese Leuchtenfunktionen umfassen bspw. eine Blinkerfunktion, eine Tagfahrlicht- oder Positionslichtfunktion, eine Rücklicht- oder Bremslichtfunktion oder eine Warnblinkfunktion. Nachfolgend wird hauptsächlich auf die Blinkerfunktion Bezug genommen, die Ausführungen gelten in entsprechender Weise jedoch auch für andere Leuchtenfunktionen, selbst wenn dies im Einzelfall nicht ausdrücklich erwähnt ist.

Zur Reduzierung von Gewicht, Installationsaufwand und Komplexität schlägt die vorliegende Erfindung vor, alle funktionsrelevanten Komponenten eines herkömmlichen Zweirad-Leuchtensystems als separat handhabbare Einheit an der Lenkstange eines Fahrrads oder E-Bikes zu befestigen bzw. in die an den Enden der Lenkstange zu montierenden Lenkergriffe zu integrieren. Die Komponenten bilden zusammen mit dem Lenkergriff ein einfach und separat zu handhabende und an den Lenkerenden der Lenkstand zu montierende Einheit.

Konventionelle E-Bikes verfügen derzeit fast alle über einen sogenannten Mittelmotor, der sich im Bereich des Tretlagers befindet. An dem Motor sind in aller Regel Buchsen zum Anschluss und zur Spannungsversorgung von Rücklicht und Frontscheinwerfer des E-Bikes vorgesehen. Viele E-Bike Motoren verfügen außerdem über eine oder mehrere Buchsen zum Anschluss von Zusatzgeräten (AUX-Ausgang). So verfügt bspw. der Motor der Bosch Performance Line CX Gen. 4 über einen sog. High-Power-Port, der einen AUX-Anschluss mit max. 12 V/ 1 A Ausgangsspannung/ -strom darstellt. Über den AUX-Ausgang kann elektrische Energie aus der Fahrbatterie des E-Bikes an Zusatzgeräte weitergeleitet werden.

An diesen AUX-Anschluss als Energiequelle kann die erfindungsgemäße Leuchten-Baugruppe mittels eines elektrischen Anschlusskabels zur elektrischen Energieversorgung problemlos angeschlossen werden. Ebenso wäre es denkbar, die Leuchten-Baugruppe direkt an eine Fahrbatterie eines E-Bikes als Energiequelle anzuschließen. Schließlich wäre es auch denkbar, die Leuchten-Baugruppe an eine separate Batterie oder eine beliebig andere Energiequelle (z.B. einen Dynamo) anzuschließen, die in dem Fahrrad oder dem E-Bike vorgesehen ist.

Die Installation der erfindungsgemäßen Leuchten-Baugruppe kann auch von einem Laien in wenigen Minuten erfolgen. Dabei müssen nur folgende Tätigkeiten ausgeführt werden:
- Lösen einer Klemmschraube der vorhandenen Lenkergriffe, Abziehen der Griffe vom Lenkerrohr, Aufschieben der erfindungsgemäßen Lenkergriffe zusammen mit den übrigen Komponenten, mit denen die Lenkergriffe eine integrale Einheit bilden, und Anziehen der Klemmschraube,
- Verlegen eines elektrischen Anschlusskabels für die Energieversorgung der Leuchten-Baugruppe in oder an dem Lenkerrohr und möglicherweise in oder an anderen Rohren des Fahrrads von den Leuchten-Baugruppen zu der Energiequelle des Fahrrads, und
- Kontaktieren bzw. Einstecken von Steckerkontakten des Anschlusskabels in entsprechende Kontakte an den Leuchten-Baugruppen und in die Energiequelle des Fahrrads.

Das elektrische Anschlusskabel kann gleichzeitig ein elektrisches Signalkabel zwischen den Leuchten-Baugruppen bilden, das ausgebildet ist, zwischen den Leuchten-Baugruppen Synchronisationssignale zur Synchronisation der durch die Leuchten-Baugruppen jeweils erzeugten Leuchtenfunktionen zu übertragen. Alternativ kann jedoch zusätzlich zu dem elektrischen Anschlusskabel zu der Energiequelle auch ein separates elektrisches Signalkabel zwischen den an gegenüberliegenden Enden des Lenkerrohrs befestigten Leuchten-Baugruppen in oder an dem Lenkerrohr verlegt und an den Leuchten-Baugruppen kontaktiert werden.

Bei der industriellen Herstellung von E-Bikes wird das Anschlusskabel zusammen mit allen anderen Kabeln des Fahrradkabelbaums durch den Fahrradrahmen zum Mittelmotor geführt. Die Lenkergriffe der erfindungsgemäßen Leuchten-Baugruppe mit den integrierten Leuchten-Komponenten werden wie konventionelle Fahrradgriffe in wenigen Sekunden an den Lenkerenden montiert. Der zeitliche Mehraufwand bei der Installation der erfindungsgemäßen Leuchten-Baugruppe in der industriellen Fertigung beträgt nur wenige Sekunden und besteht aus Einstecken der Steckerkontakte des Anschlusskabels in die beiden Leuchten-Baugruppen und den AUX-Anschluss des Mittelmotors oder eine andere Energiequelle.

Neben der Reduzierung der Komplexität und des Zeitaufwandes bei der Montage kann die erfindungsgemäße Lösung auch die im Fahrradbau üblichen Anforderungen an den Leichtbau erfüllen, weil die erfindungsgemäßen Leuchten-Baugruppen nur etwa 20% schwerer als herkömmliche Kunststoffgriffe und ca. 90% leichter als die konventionelle Motorradblinkerlösung mit vier einzeln montierten Blinkern inkl. Befestigungsmaterial, Kabeln, separater Steuerelektronik und Standardgriffen aus Kunststoff sind.

Neben der Lösung der genannten Probleme zeigt die Erfindung weitere wichtige Vorteile im Hinblick auf die Sicherheit:
- wesentlich verbesserte Sichtbarkeit des Richtungsänderungssignals,
- Möglichkeit einer Erweiterung der Leuchten-Baugruppen durch eine Positionslicht-Funktion, was ebenfalls eine verbesserte Sicherheit im Straßenverkehr zur Folge hat,
- Möglichkeit einer Erweiterung der Leuchten-Baugruppen durch eine oder mehrere weitere Leuchtenfunktionen, bspw. Rücklicht-, Bremslicht- oder Warnblinklichtfunktion, was ebenfalls eine verbesserte Sicherheit im Straßenverkehr zur Folge hat,
- bei der Blinklicht-Funktion, klare und eindeutige Kommunikation der Abbiegeabsicht und Begleitung des Abbiegevorgangs durch gesetzeskonformes Blinklicht, sichtbar von vorn und hinten,
- erhöhte Fahrsicherheit, weil beide Hände des Fahrers stets am Lenker bleiben,
- Möglichkeit einer Komfortblinkfunktion, bei der die Blinker im Stillstand weiterblinken und nach dem Anfahren nach einigen Sekunden oder nach einer bestimmten Wegstrecke automatisch deaktiviert werden. Ein versehentliches Dauerblinken wird hiermit ausgeschlossen.

Das besondere Design der Leuchten-Baugruppe umfasst den Lenkergriff und als integralen Bestandteil an einem distalen Ende bzw. einer Stirnseite des Lenkergriffs eine Leuchte, die vorzugsweise gemäß der EP 2 439 132 A1 ausgebildet ist. Die Leuchte umfasst ein Leuchtengehäuse mit zylindrischer Form, wobei ein Durchmesser des Gehäuses in etwa einem Durchmesser des Lenkergriffs entspricht. Eine Längsachse des Lenkergriffs ist vorzugsweise deckungsgleich mit einer Längsachse des Leuchtengehäuses. In dem Gehäuse ist die mindestens eine Lichtquelle angeordnet und elektrisch kontaktiert. Das Leuchtengehäuse ist zur verbesserten Wärmeableitung bevorzugt aus Metall gefertigt.

Auf dem Leuchtengehäuse sitzt eine Optikbaugruppe, die vorzugsweise aus lichtdurchlässigem Glas oder Kunststoff besteht. Eine Hauptabstrahlrichtung der mindestens einen Lichtquelle ist in Richtung der Optikbaugruppe gerichtet. Das von der Lichtquelle ausgesandte Licht koppelt in die Optikbaugruppe ein und wird von dieser an einer oder mehreren Grenzflächen, vorzugsweise mittels Totalreflexion, in mindestens eine Hauptleuchtenrichtung umgelenkt. Die Optikbaugruppe hat bevorzugt die Form eines Kegelstumpfes. Die Hauptleuchtenrichtung ist bei ordnungsgemäß montierter Leuchten-Baugruppe bevorzugt in Fahrtrichtung des Fahrrads oder entgegen der Fahrtrichtung gerichtet.

Auf der Optikbaugruppe ist auf einer dem Leuchtengehäuse gegenüberliegenden Seite eine Abdeckplatte befestigt, bspw. mittels Kleben. Diese besteht bspw. aus Kunststoff oder Metall. Die Abdeckplatte kann die Optikbaugruppe vor Beschädigungen bei einem Sturz oder bei Kontakt mit einem harten Gegenstand, bspw. einer Hauswand, schützen. Im Falle einer Beschädigung kann die Abdeckkappe oder die gesamte Leuchte schnell und einfach ersetzt werden. Insbesondere kann ein Austausch der Leuchte durch das vorgeschlagene Konzept des wieder lösbaren Anschlusskabels schnell und unkompliziert umgesetzt werden, selbst durch technische Laien.

Die beiden an den gegenüberliegenden Enden eines Lenkerrohrs befestigten Leuchten-Baugruppen werden über eine Anschlussbuchse, die auf einer flexiblen Leiterplatte des Bedienelements angeordnet und kontaktiert sein kann, über ein vorzugsweise Y-förmiges elektrisches Anschlusskabel mit der Energiequelle des Fahrrads verbunden. Zu diesem Zweck kann das Anschlusskabel über zwei Leitungen verfügen, je eine für die "+"- und "-"-Polarität der Energieversorgung. Alternativ kann das Anschlusskabel auch nur eine Leitung zur Energieversorgung haben, bspw. für die "+"-Polarität der Energieversorgung, wobei dann für die "-"+Polarität Masse bzw. Metallrohre eines Metallrahmens des Fahrrads genutzt werden können. Die Verbindung zwischen den Leuchten-Baugruppen kann zudem als elektrisches Signalkabel zur Synchronisation der durch die Leuchten-Baugruppen jeweils erzeugten Leuchtenfunktionen dienen. Weiterhin kann das Signalkabel dazu dienen, die Betätigung bzw. Aktivierung der an den Lenkergriffen ausgebildeten Bedienelemente der beiden Leuchten-Baugruppen an die jeweils andere Leuchten-Baugruppe zu übermitteln. Blinkt beispielsweise der rechte Griff-Blinker und der Benutzer betätigt das an der linken Leuchten-Baugruppe vorgesehene Bedienelement, erlischt der Griff-Blinker auf der rechten Seite. Der Griff-Blinker der linken Seite kann unmittelbar danach automatisch oder erst nach einer erneuten Betätigung des linken Bedienelements blinken.

Aufbau und Funktionsweise der erfindungsgemäßen Leuchten-Baugruppe bzw. des Leuchtensystems wird nachfolgend anhand eines Fahrtrichtungsanzeigers erläutert. Die Ausführungen gelten jedoch in entsprechender Weise auch für andere Leuchtenfunktionen. Das für die Funktion der Leuchte, einem Fahrtrichtungsanzeiger, benötigte Licht wird über eine oder mehrere Halbleiterlichtquellen, bspw. Hochleistungs-Leuchtdioden (LEDs), erzeugt. Sehr gut eignen sich hierfür Phosphorkonvertierte LEDs, die amberfarbenes Licht abstrahlen. Diese nutzen typischerweise einen blauen LED-Chip, der Licht einer Wellenlänge im Bereich von etwa 440 bis 470 Nanometern (nm) emittiert. Dem Halbleiter ist eine Phosphorschicht zugeordnet, welche einen Teil des abgestrahlten Lichts in Licht längerer Wellenlänge konvertiert, sodass eine Überlagerung der unkonvertierten blauen und der konvertierten längerwelligen Lichtanteile die gewünschte Lichtfarbe des Blinklichts (z.B. amberfarbene Licht) erzeugt. Selbstverständlich können auch andere Halbleiterlichtquellen verwendet werden, die die gewünschte Lichtfarbe des Blinklichts durch Überlagerung anders farbener Lichtanteile oder direkt erzeugen. Insbesondere ist an die Verwendung von einer oder mehreren RGB-LEDs in der Leuchten-Baugruppe gedacht, die je nach Ansteuerung rotes, grünes oder blaues Licht oder eine beliebige Farbmischung aus diesen Grundfarben emittieren können. Auf diese Weise können durch eine Leuchten-Baugruppe verschiedene Leuchtfunktionen realisiert werden, die unterschiedlich farbenes Licht erfordern, z.B. amberfarbenes Licht für Blinklicht, weißes Licht für Positionslicht, rotes Licht für Rücklicht oder Bremslicht.

Die LEDs sind auf einer Leiterplatte mittels eines SMD-Verfahrens aufgebracht und kontaktiert. Selbstverständlich können die LEDs auch auf andere Weise auf die Leiterplatte aufgebracht und kontaktiert werden. Die Leiterplatte kann thermisch an das Metallgehäuse der Leuchte angebunden sein, um die im Betrieb der Leuchte als Wärme entstehende Verlustleistung an das Metallgehäuse abzuleiten, welches die Wärme wiederum an die Umgebung abstrahlt. Die thermische Anbindung der Leiterplatte zu dem Metallgehäuse erfolgt dabei bevorzugt über eine wärmeleitende Klebeverbindung oder auf eine beliebig andere Weise.

Weiterhin ist auf der Haupteiterplatte der Leuchte ein getakteter Schaltregler zur Bereitstellung des für den Betrieb der Lichtquelle(n) der Leuchte erforderlichen getakteten Stroms angeordnet und kontaktiert. Die Höhe des zur Verfügung gestellten Betriebsstroms bestimmt die Helligkeit der LED. Der Betriebsstrom kann kontinuierlich überwacht und unabhängig von der Eingangsspannung der Energiequelle auf einen vorgegebenen Wert konstant geregelt werden, um Helligkeitsschwankungen der Leuchtenfunktion zu vermeiden.

Weiterhin ist die Hauptleiterplatte mit der Steuerelektronik in der Form eines Mikrocontrollers bestückt, welcher die Funktionen und Betriebszustände der Leuchte bzw. der Lichtquelle(n) steuert. Weitere elektrische und elektronische Bauelemente, mit denen die Hauptleiterplatte bestückt sein kann, haben die Aufgabe eines Verpolungs- und Überspannungsschutzes der gesamten elektrischen Schaltung.

Weitere Merkmale und Vorteile der Erfindung werden nachfolgend unter Bezugnahme auf die Figuren näher erläutert. Dabei können einzelne in den Figuren gezeigte Merkmale auch für sich alleine erfindungswesentlich sein, selbst wenn dies in den Figuren nicht gezeigt und in der Beschreibung nicht ausdrücklich erwähnt ist. Ebenso können die in den Figuren gezeigten Merkmale auch in beliebiger Weise miteinander kombiniert werden, selbst wenn eine solche Kombination in den Figuren nicht gezeigt und in der Beschreibung nicht ausdrücklich erwähnt ist. Es zeigen:
- Fig. 1: ein Lenkerrohr eines Fahrrads, insbesondere eines E-Bikes, mit einem daran befestigten erfindungsgemäßen Leuchtensystem, das an gegenüberliegenden Enden befestigte erfindungsgemäße Leuchten-Baugruppen umfasst;
- Fig. 2: eine erfindungsgemäße Leuchten-Baugruppen gemäß einer bevorzugten Ausführungsform in einem fertig montierten Zustand und bereit, an einem distalen Ende des Lenkerrohrs befestigt zu werden;
- Fig. 3: die Leuchten-Baugruppe aus Fig. 2 in einer Explosionsdarstellung;
- Fig. 4: eine Leuchte der Leuchten-Baugruppe aus Fig. 2;
- Fig. 5: die Leuchte aus Fig. 4 mit einem Teil eines Bedienelements der Leuchten-Baugruppe aus Fig. 2 in einer Explosionsdarstellung aus einer ersten Blickrichtung;
- Fig. 6: die Leuchte aus Fig. 4 mit einem Teil eines Bedienelements der Leuchten-Baugruppe aus Fig. 2 in einer Explosionsdarstellung aus einer anderen Blickrichtung;
- Fig. 7: die Leuchten-Baugruppe aus Fig. 2 in einer ersten Schnittansicht entlang einer Längsachse des Lenkerrohrs;
- Fig. 8: die Leuchten-Baugruppe aus Fig. 2 in einer gegenüber der Schnittansicht aus Fig. 7 um 90° um die Längsachse des Lenkerrohrs gedrehten anderen Schnittansicht; und
- Fig. 9: ein Bedienelement der erfindungsgemäßen Leuchten-Baugruppe in einer perspektivischen Ansicht.

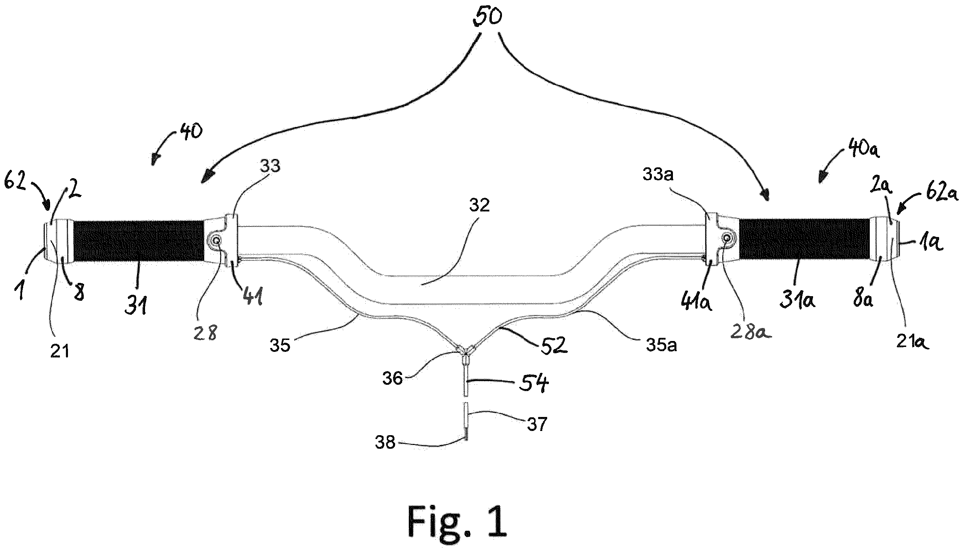

In Fig. 1 ist ein erfindungsgemäßes Leuchtensystem 50 gezeigt, das an einem Fahrrad (nicht dargestellt), insbesondere an einem E-Bike, zur Realisierung einer Leuchtenfunktion befestigt ist. Das Leuchtensystem 50 umfasst zwei erfindungsgemäße Leuchten-Baugruppen 40, die an gegenüberliegenden distalen Enden eines Lenkerrohrs 32 des Fahrrads befestigt sind. Insbesondere ist eine der Leuchten-Baugruppen 40 zur Montage als integrale Einheit an einem ersten Lenkerende des Lenkerrohrs 32 des Fahrrads und die andere Leuchten-Baugruppe 40 zur Montage als integrale Einheit an einem dem ersten Lenkerende gegenüberliegenden zweiten Lenkerende des Lenkerrohrs 32 ausgebildet.

Das Leuchtensystem 50 weist ein elektrisches Signalkabel 52 auf, das zwischen den Leuchten-Baugruppen 40 verläuft und ausgebildet ist, zwischen den Leuchten-Baugruppen 40 Synchronisationssignale zur Synchronisation der durch die Leuchten-Baugruppen 40 jeweils erzeugten Leuchtenfunktionen zu übertragen. Ferner weist das Leuchtensystem 50 ein elektrisches Anschlusskabel 54 zwischen den Leuchten-Baugruppen 40 einerseits und einer Energiequelle (nicht dargestellt) des Fahrrads andererseits auf. Das Anschlusskabel 54 ist ausgebildet, von der Energiequelle elektrische Energie zum Betrieb der Leuchten-Baugruppen 40 an diese zu übertragen.

Das Anschlusskabel 54 weist zum Anschluss an eine Energiequelle einen fahrzeugspezifischen Stecker 38 auf. Es ist denkbar, dass das Signalkabel 52 und das Anschlusskabel 54 zumindest teilweise durch einen gemeinsamen Kabelbaum realisiert sind. In dem gezeigten Beispiel ist ein einziger Y-förmiger Kabelbaum vorgesehen. Eine oder mehrere Leitungen des Kabelbaums können als Signalkabel 52 und/oder als Anschlusskabel 54 dienen. Es ist denkbar, dass gleiche Leitungen des Kabelbaums sowohl als Signalkabel 52 als auch als Anschlusskabel 54 dienen. In dem Beispiel der Fig. 1 dienen bspw. Teile 35, 35a des Kabelbaums sowohl als Signalkabel 52 als auch als Anschlusskabel 54. Dazu können die gleichen oder unterschiedliche Leitungen des Kabelbaums verwendet werden. Ein Teil 37 des Kabelbaums bzw. die entsprechenden Leitungen dienen ausschließlich als Anschlusskabel 54. Mit dem Bezugszeichen 36 ist eine Verzweigung des Kabelbaums bzw. der entsprechenden Leitungen bezeichnet. Der Kabelbaum 35, 35a, 36, 37 kann im Inneren des Lenkerrohrs 32 und ggf. anderer Rohre des Fahrradrahmens oder - wie gezeigt - außerhalb verlegt sein.

Mit dem Bezugszeichen 38 ist ein anschlussspezifischer Stecker des Kabelbaums 35, 35a, 36, 37 zum Anschluss an die Energiequelle des Fahrrads bezeichnet. Als Anschluss der Energiequelle, in den der Stecker 38 gesteckt werden kann, kann ein AUX-Anschluss eines E-Bike-Motors, ein Anschluss direkt an einer Fahrbatterie eines E-Bikes, ein Anschluss einer separaten Batterie, die in dem Fahrrad oder dem E-Bike vorgesehen ist, oder ein Anschluss einer beliebig anderen elektrischen Energiequelle (z.B. eines Dynamos) dienen.

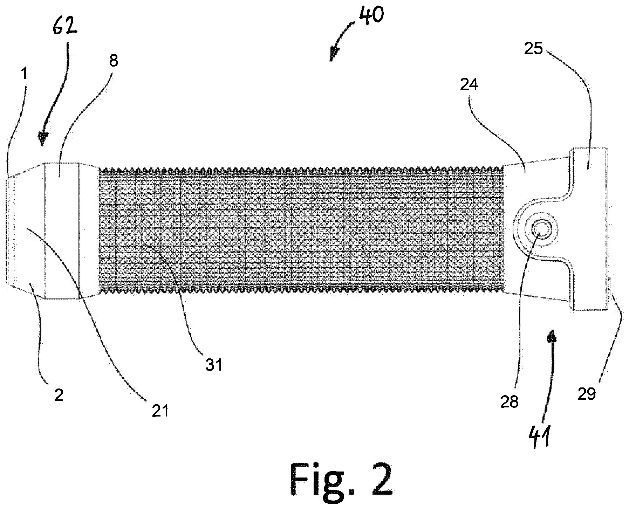

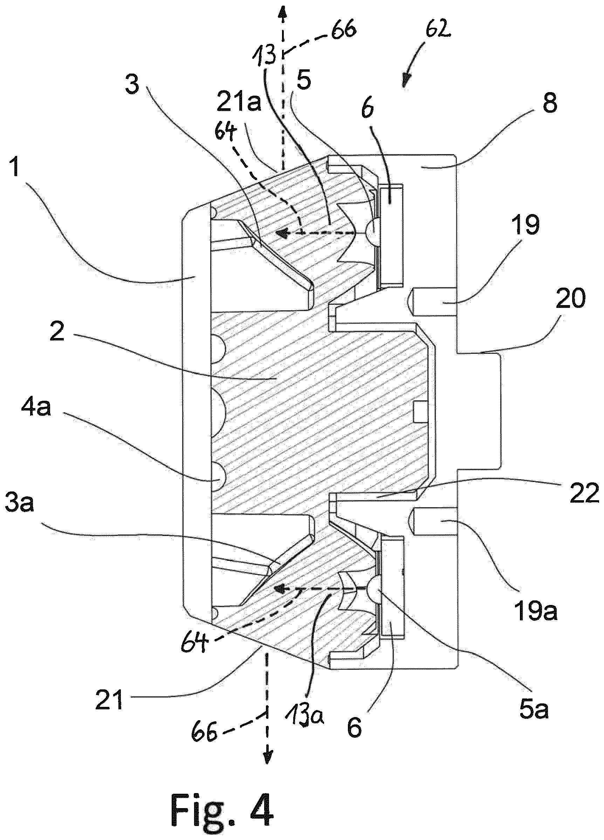

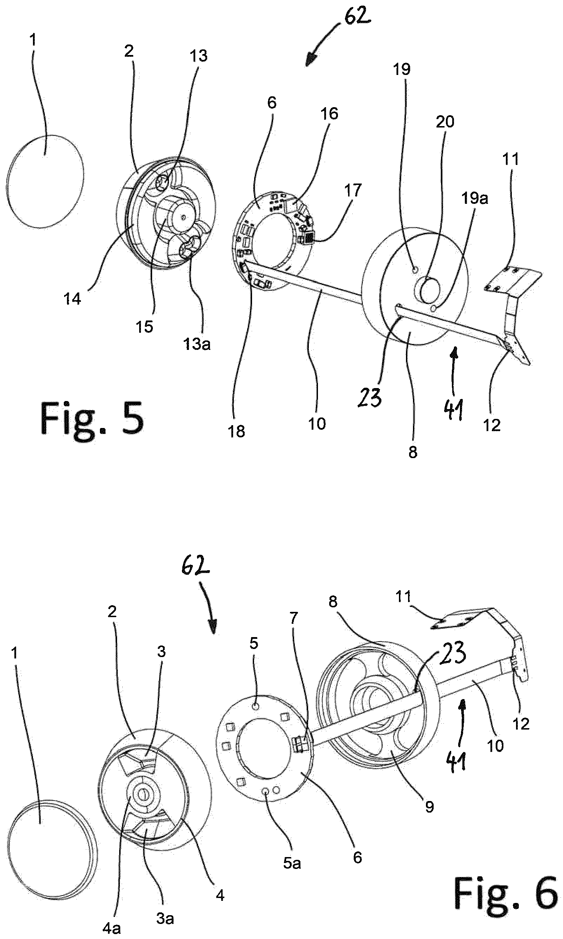

Fig. 2 zeigt eine der Leuchten-Baugruppen 40 des Leuchten-Systems 50 aus Fig. 1. Die Leuchten-Baugruppe 40 ist zur Montage an einem Fahrrad, insbesondere an einem E-Bike, und zur Realisierung einer Leuchtenfunktion oder eines Teils davon ausgebildet. Die Leuchten-Baugruppe 40 umfasst eine Leuchte 62 mit mindestens einer Lichtquelle 5 (vgl. Fig. 4), insbesondere einer Halbleiterlichtquelle, ganz besonders bevorzugt einer LED, und eine Steuerelektronik 16 (vgl. Fig. 5), die zur Ansteuerung der Lichtquelle 5 und zur Realisierung der Leuchtenfunktion ausgebildet ist.

Zur Realisierung einer Blinklichtfunktion wird als Lichtquelle 5 bevorzugt eine Hochleistungs-LED eingesetzt, die bernstein- oder amberfarbenes Licht aussendet. Dazu kann ein LED-Chip der LED bspw. blaues Licht aussenden, von dem ein Teil an einem dem LED-Chip zugeordneten Konvertermaterial, bspw. Phosphor, in längerwelliges Licht konvertiert wird, und eine Überlagerung der blauen und der konvertierten längerwelligen Lichtanteile das amberfarbene Licht erzeugt. Alternativ kann auch eine RGB-LED als Lichtquelle 5 eingesetzt werden, die drei LED-Chips umfasst, die jeweils rotes, grünes oder blaues Licht aussenden, und sich die gewünschte Farbe des von der LED ausgesandten Lichts durch eine Überlagerung der mehr oder weniger intensiven roten, grünen und blauen Lichtanteile ergibt.

Zur Realisierung einer Tagfahrlicht- oder Positionslichtfunktion wird als Lichtquelle 5 bevorzugt eine Hochleistungs-LED eingesetzt, die weißes Licht aussendet. Das weiße Licht kann sich durch Überlagerung von nicht konvertierten Lichtanteilen und an einem Konvertermaterial konvertierten Lichtanteilen oder durch Verwendung einer RGB-LED und entsprechende Ansteuerung der einzelnen RGB-LED-Chips ergeben. Die weißes Licht aussendende Lichtquelle 5 kann zusätzlich zu der amberfarbenes Licht aussendenden Lichtquelle 5 oder stattdessen vorgesehen sein. Es wäre auch denkbar, dass bspw. im Fall einer RGB-LED 5, diese je nach Ansteuerung der RGB-LED-Chips amberfarbenes oder weißes Licht aussendet.

Zur Realisierung einer Rücklicht- oder Bremslichtfunktion wird als Lichtquelle 5 bevorzugt eine Hochleistungs-LED eingesetzt, die rotes Licht aussendet. Das weiße Licht kann sich durch Überlagerung von nicht konvertierten Lichtanteilen und an einem Konvertermaterial konvertierten Lichtanteilen oder durch Verwendung einer RGB-LED und entsprechende Ansteuerung der einzelnen RGB-LED-Chips ergeben. Die rotes Licht aussendende Lichtquelle 5 kann zusätzlich zu der amberfarbenes Licht aussendenden Lichtquelle 5 oder stattdessen oder zusätzlich zu der weißes Licht aussendenden Lichtquelle 5 oder stattdessen vorgesehen sein. Es wäre auch denkbar, dass bspw. im Fall einer RGB-LED 5, diese je nach Ansteuerung der RGB-LED-Chips amberfarbenes, weißes oder rotes Licht aussendet.

Die Steuerelektronik 16 ist bevorzugt als ein Mikrocontroller oder Mikroprozessor ausgebildet, auf dem ein Computerprogramm ablauffähig ist. Das Computerprogramm ist programmiert, die Ansteuerung der Lichtquelle 5 und die Leuchtenfunktion zu realisieren, wenn es auf dem Mikrocontroller oder Mikroprozessor abläuft. Die Steuerelektronik 16 ist bevorzugt integraler Bestandteil der Leuchte 62. Vorzugsweise ist die Steuerelektronik in der Form des Mikrocontrollers oder Mikroprozessors auf einer Hauptleiterplatte 6 der Leuchte 62, welche auch die mindestens eine Lichtquelle 5 trägt und kontaktiert, angeordnet und kontaktiert.

Ferner umfasst die Leuchten-Baugruppe 40 vorteilhafterweise einen zur Montage an einem Lenkerende des Lenkerrohrs 32 des Fahrrads vorgesehenen Lenkergriff 31. Der Lenkergriff 31 kann ein Griffgehäuse 25 umfassen, mit dem der Lenkergriff 31 an dem Lenkerrohr 32 befestigt werden kann, und ein Griffteil 24, der an dem Griffgehäuse 25 befestigt ist.

Die Leuchte 62, die Steuerelektronik 16 sowie ein Bedienelement 28, insbesondere ein Taster, ganz besonders bevorzugt ein Drucktaster, der zur Ansteuerung der mindestens einen Lichtquelle 5 ausgebildet ist, sind als integrale Einheit 33, 33a (vgl. Fig. 1) zusammen mit dem Lenkergriff 31 ausgebildet. Der Lenkergriff 31 mit den daran befestigten bzw. damit integral ausgebildeten Leuchte 62, Steuerelektronik 16 und Bedienelement 28 ist zur Montage an dem Lenkerende des Lenkerrohrs 32 als separat handhabbare integrale Einheit 33, 33a ausgebildet.

Der Lenkergriff 31 weist eine im Wesentlichen hohlzylinderförmige Form und an einer ersten Stirnseite eine Öffnung zur Aufnahme eines distalen Endes eines Lenkerendes des Lenkerrohrs 32 des Fahrrads auf. Die Leuchte 62 ist bevorzugt an einer der ersten Stirnseite gegenüberliegenden zweiten Stirnseite des Lenkergriffs 31 angeordnet bzw. befestigt. Die Befestigung kann mittels Kleben, Schrauben oder auf andere Weise erfolgen.

Das Bedienelement 28 ist bevorzugt an einer Umfangsfläche des Lenkergriffs 31 im Bereich der ersten Stirnseite des Lenkergriffs 31 angeordnet bzw. ausgebildet. Das Bedienelement 28 ist derart an dem Lenkergriff 31 angeordnet, dass es bei ordnungsgemäß an dem Lenkerrohr 32 befestigter Einheit 33, 33a dem Fahrer zugewandt ist, sodass dieser das Bedienelement 28 bzw. mit dem Daumen betätigen kann. Alternativ könnte das Bedienelement 28 auch als ein Drehschalter ausgebildet sein, der durch Drehung um die Längsachse des Lenkergriffs 31 bzw. des Lenkerrohrs 32 in verschiedene Schaltpositionen gebracht werden kann. Mittels des Bedienelements 28 kann in Abhängigkeit von der Betätigung durch den Fahrer die Leuchtenfunktion aktiviert und/oder deaktiviert, oder eine von mehrere durch die Leuchten-Baugruppe 40 realiserbare Leuchtenfuntkionen ausgewählt werden.

Die Leuchte 62 umfasst mindestens eine Optikbaugruppe 2, die ausgebildet ist, von der mindestens einen Lichtquelle 5, 5a in eine Hauptabstrahlrichtung 64 ausgesandtes Licht zu bündeln und/oder in mindestens eine Hauptleuchtrichtung 66 der Leuchtfunktion umzulenken. Die Hauptabstrahlrichtung 64 der Lichtquelle 5, 5a verläuft bei an dem Lenkerrohr 32 ordnungsgemäß befestigter Einheit 33, 33a bevorzugt parallel zu der Längsachse des Lenkerrohrs 32 bzw. quer zu einer Fahrtrichtung des Fahrrads. Die Hauptleuchtrichtung 66 der Leuchtfunktion verläuft bevorzugt in oder entgegen der Fahrtrichtung des Fahrrads. Somit ist die Optikbaugruppe 2 bevorzugt ausgebildet, eine 90°-Umlenkung des Lichts in bzw. entgegengesetzt zu der Fahrtrichtung des Fahrrads auszuführen. In dem gezeigten Beispiel der Fig. 4 umfasst die Leuchte 62 zwei Lichtquellen 5, 5a, wobei jeder der Lichtquellen 5, 5a ein gesonderter Kollimator 13, 13a der Optikbaugruppe 2 zugeordnet ist, um das von den Lichtquellen 5, 5a ausgesandte Licht zu bündeln und/oder umzulenken.

Die Optikbaugruppe 2 umfasst bevorzugt ein massives lichtdurchlässiges Material, bspw. einen transparenten Kunststoff oder Glas, insbesondere PMMA. Das von der Lichtquelle 5 abgestrahlte Licht wird über eine Lichteinkoppelfläche in die Optikbaugruppe 2 eingekoppelt, darin an Grenzflächen 3, 3a reflektiert, vorzugsweise mittels Totalreflexion, und über eine Lichtauskoppel- oder -austrittsfläche 21, 21a aus der Optikbaugruppe 2 wieder ausgekoppelt. Die Grenzflächen 3 sind zwischen dem optisch dichteren transparenten Material der Optikbaugruppe 2 und einem optisch weniger dichten angrenzenden Medium, bspw. Luft, ausgebildet. Es ist denkbar, dass die Optikbaugruppe 2 auch mehr als eine Grenzfläche 3, 3a umfasst. Bevorzugt ist jeweils eine Grenzfläche 3, 3a einer Lichtquelle 5, 5a zugeordnet. Es wäre aber auch denkbar, dass mehrere Grenzflächen 3 einer einzigen Lichtquelle 5 zugeordnet sind und das Umlenken des Lichts einer Lichtquelle 5 eine mehrfache Reflexion an den Grenzflächen 3 umfasst.

Besonders bevorzugt ist die Optikbaugruppe 2 ausgebildet, wie in Fig. 4 gezeigt, von der mindestens einen Lichtquelle 5, 5a in die Hauptabstrahlrichtung 64 ausgesandte Licht in zwei entgegengesetzt zueinander gerichtete Hauptleuchtrichtungen 66, 66a umzulenken, wobei eine der Hauptleuchtrichtungen 66a bevorzugt in Fahrtrichtung eines mit der Leuchten-Baugruppe 40 versehenen Fahrrads und die andere Hauptleuchtrichtung 66 entgegengesetzt zu der Fahrtrichtung des Fahrrads gerichtet ist.

Wie ferner in Fig. 4 gezeigt, umfasst die Leuchte 62 bevorzugt mindestens zwei zueinander beabstandet angeordnete Lichtquellen 5, 5a, wobei eine der Lichtquellen 5a zum Aussenden von Licht ausgebildet ist, das nach dem Umlenken durch die Optikbaugruppe 2 in die Fahrtrichtung des Fahrrads gerichtet ist, und die andere Lichtquelle 5 zum Aussenden von Licht ausgebildet ist, das nach dem Umlenken durch die Optikbaugruppe 2 entgegengesetzt zu der Fahrtrichtung des Fahrrads gerichtet ist.

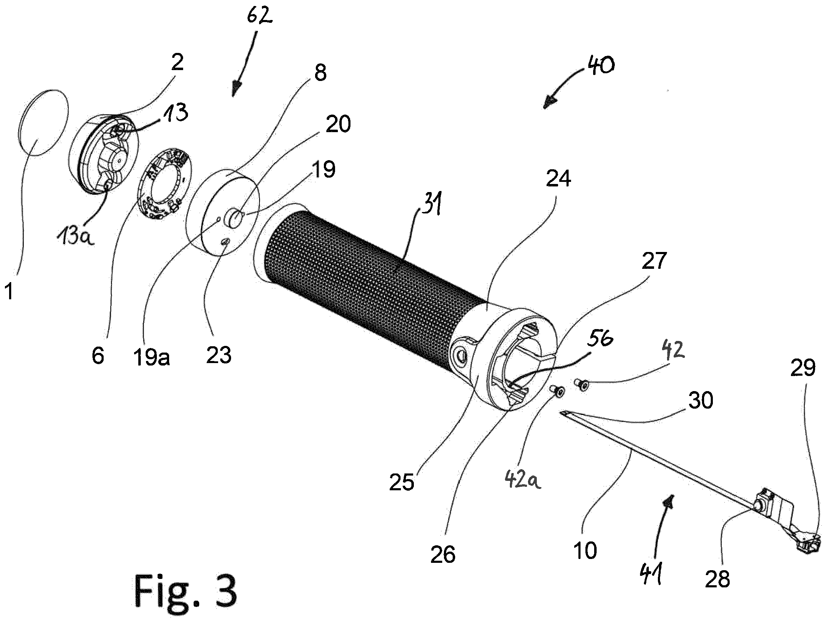

Außerdem kann die Leuchte 62 ein Leuchtengehäuse 8 (vgl. Fig. 3) umfassen, das aus Kunststoff, Metall oder einem anderen geeigneten Material besteht. In dem Fall eines Leuchtengehäuses 8 aus Metall kann die Hauptleiterplatte 6, auf der die mindestens eine Lichtquelle 5 angeordnet und elektrisch kontaktiert ist, thermisch an das Metallgehäuse 8 angebunden sein. Auf diese Weise kann während des Betriebs der Leuchten-Baugruppe 40 bzw. der Lichtquelle 5 entstehende Verlustwärme über das Metallgehäuse 8 an die Umgebung abstrahlen. Die thermische Anbindung der Hauptleiterplatte 6 zum Metallgehäuse 8 erfolgt bevorzugt über eine wärmeleitende Klebeverbindung. Eine entsprechende Klebefläche ist in Fig. 6 mit dem Bezugszeichen 9 bezeichnet.

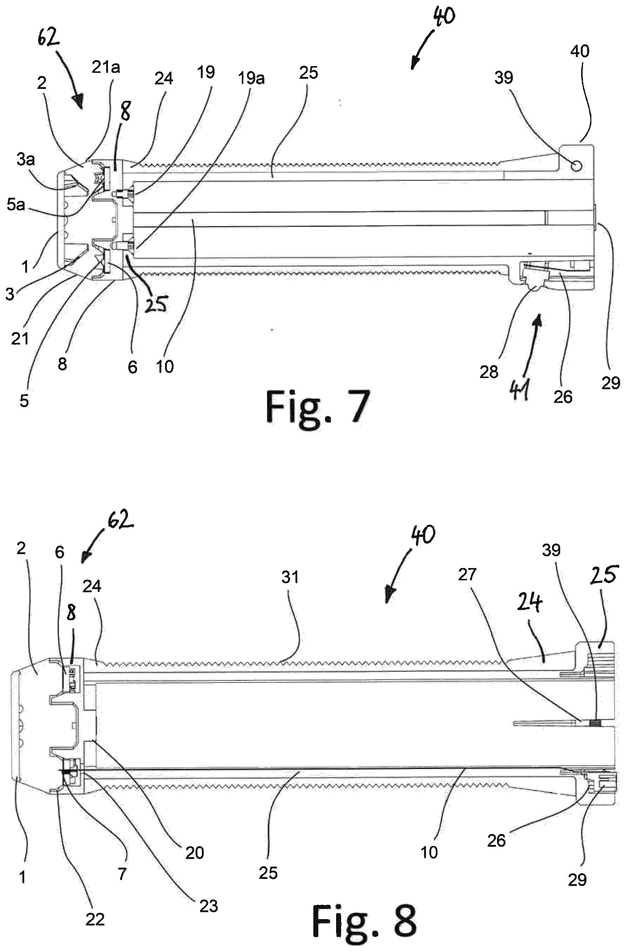

Auf dem Leuchtengehäuse 8 ist die Optikbaugruppe 2 angebracht. Die Befestigung des der Optikbaugruppe 2 an dem Leuchtengehäuse 8 kann ebenfalls mittels einer Klebeverbindung oder auf eine beliebig andere Weise (z.B. mittels einer Rastverbindung, Schraubverbindung, Bajonettverbindung) erfolgen. In Fig. 5 sind beispielhaft entsprechende Klebeflächen 14, 15 und in Fig. 8 ein entsprechender Klebespalt 22 vorgesehen, mit denen die Optikbaugruppe 2 an dem Leuchtengehäuse 8 befestigt werden kann. Auf der Optikbaugruppe 2 ist eine Schutzabdeckung oder Abdeckplatte 1 aus Kunststoff oder Metall befestigt, bspw. mittels einer Klebeverbindung, einer Rastverbindung, einer Schraubverbindung, einer Bajonettverbindung o.ä. Zur Realisierung einer Klebeverbindung sind in der der Abdeckplatte 1 zugewandten Außenseite der Optikbaugruppe 2 Nuten 4, 4a für einen Klebespalt ausgebildet. Die verwendete Leuchte 62 entspricht bevorzugt der aus der EP 2 439 132 A1 bekannten Leuchte. Der Inhalt der EP 2 439 132 A1 wird hinsichtlich Aufbau und Funktion der Leuchte durch Verweis vollumfänglich zum Inhalt der vorliegenden Erfindung gemacht.

Die Leuchte 62 kann mittels einer Klebeverbindung oder auf andere Weise, bspw. mittels einer Schraubverbindung, an dem Lenkergriff 31 befestigt werden. Insbesondere ist die Leuchte 62 zur Befestigung an dem Griffgehäuse 25 des Lenkergriffs 31 ausgebildet. Zu diesem Zweck können Befestigungsschrauben 42, 42a vorgesehen sein (vgl. Fig. 3), die von der Innenseite des Lenkergriffs 31 aus in entsprechende an der Grundfläche des Leuchtengehäuses 8 ausgebildete Befestigungsgewinde 19, 19a geschraubt werden können. Zur genauen Positionierung der Leuchte 62 bezüglich des Lenkergriffs 31 ist an der dem Lenkergriff 31 zugewandten Unterseite des Leuchtengehäuses 8 ein Zentrierungselement 20 vorgesehen, das im Rahmen der Montage in eine entsprechende Aussparung (nicht dargestellt) in einer der Leuchte 62 zugewandten Stirnfläche des Lenkergriffs 31 eingreift.

Auf der Hauptleiterplatte 6 kann neben den Lichtquellen 5, 5a und der Steuerelektronik 16 auch ein Schaltregler 17 zur Konstantstromregelung angeordnet und kontaktiert sein. Der Schaltregler 17 kann als ein getakteter Schaltregler ausgebildet sein, der die Höhe des Betriebsstroms bspw. mittels Pulsweitenmodulation variiert. Weitere elektrische und elektronische Bauelemente, mit denen die Hauptleiterplatte 16 bestückt sein kann, haben die Aufgabe eines Verpolungs- und Überspannungsschutzes der gesamten elektrischen Schaltung der Leuchte 62.

Lichtquellen 5, 5a in der Form von LEDs strahlen Licht jeweils in eine Hauptabstrahlrichtung 64 bspw. in einem Kegel von 120° orthogonal von der Leiterplatte 6 ab. Dazu kann in Lichtaustrittsrichtung vor einem oder mehreren LED-Chips einer LED 5, 5a eine Bündelungsoptik angeordnet sein, bspw. eine sphärische Linse aus einem transparenten Material, bspw. aus Kunststoff, welche das von dem LED-Chip in den gesamten 180°-Halbraum ausgesandte Licht zu dem 120°-Lichtkegel bündelt.

In der Leuchte 62 sind Anordnung und Ausgestaltung der Lichtquelle(n) 5, 5a und die Außenform, Außenflächen (Lichteintrittsflächen und Lichtaustrittsflächen 21, 21a) und Grenzflächen 3, 3a der Optikbaugruppe 2 bevorzugt derart aufeinander abgestimmt, dass die für die entsprechende Leuchtenfunktion, bspw. die Funktion eines Fahrtrichtungsanzeigers, geforderte räumliche Lichtverteilung nach ECE R50 bzw. ECE R148 erfüllt wird. Eine Konformität mit den gesetzlichen Bestimmungen des jeweiligen Landes bzw. der jeweiligen Region, wo die Leuchte 62 zum Einsatz vorgesehen ist, ist jedoch nicht zwingende Voraussetzung für die vorliegende Erfindung.

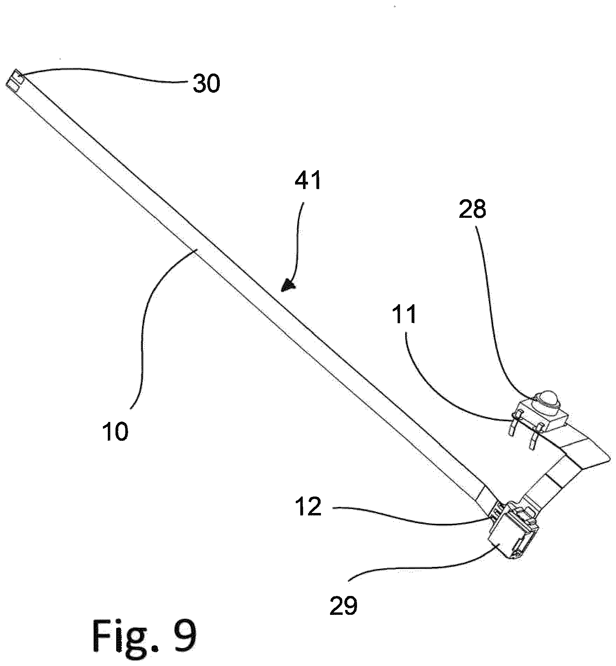

Die Bedienung der Leuchte 62 durch den Radfahrer erfolgt durch ein in der integralen Einheit 33, 33a der erfindungsgemäßen Leuchten-Baugruppe 40 integriertes Bedienelement 28. Das Bedienelement 28 ist über ein Kontaktpad 11, insbesondere ein THT (Through Hole Technology)-Pad, an einer flexible Leiterplatte 10 der Bedienelement-Baugruppe 41 kontaktiert. Die flexible Leiterplatte 10 steht einerseits mit dem Kontaktpad 11 bzw. dem Bedienelement 28 in Kontakt und ist andererseits über eines oder mehrere Kontaktierungspads 30 (vgl. Fig. 9) an der Hauptleiterplatte 6 der Leuchte 62 angeschlossen. Der Anschluss an die Hauptleiterplatte 6 kann mittels entsprechender Steckerelemente (eines an dem proximalen Ende der flexiblen Leiterplatte 10 und das andere auf der Hauptleiterplatte 6), die ineinander gesteckt werden, oder mittels einer Lötverbindung zwischen einer oder mehreren Leiterbahnen der flexiblen Leiterplatte 10 und einem oder mehreren auf der Leiterplatte 6 vorgesehenen Lötpads 7 erfolgen. Zwischen dem Kontaktpad 11 für das Bedienelement 28 und der flexiblen Leiterplatte 10 ist ein Steckerpad 12 vorgesehen, das an eine Anschlussbuchse 29 (vgl. Fig. 9) angeschlossen werden kann. Die Anschlussbuchse 29 ist in dem Lenkergriff 31 bzw. dem Griffgehäuse 25, insbesondere an der ersten Stirnseite des Lenkergriffs 31 neben der Öffnung zur Aufnahme des distalen Endes des Lenkerrohrs 32 vorgesehen. Ein entsprechendes Steckerelement (nicht dargestellt), das an dem distalen Ende des Signalkabels 52 bzw. des Anschlusskabels 54 bzw. der Leitungsarme 35, 35a des Kabelbaums 35, 35a, 36, 37 vorgesehen ist, kann in die Anschlussbuchse 29 gesteckt werden, um die Leuchten-Baugruppe 40 mit der Energiequelle und der anderen Leuchten-Baugruppe 40a an dem gegenüberliegenden Lenkerende zu verbinden.

Ein Schaltsignal des Bedienelements 28 einer an einem ersten distalen Ende des Lenkerrohrs 32 eines Fahrrads befestigen Leuchten-Baugruppe 40 wird über die flexible Leiterplatte 10 zu der Hauptleiterplatte 6 und weiter zu der Steuerelektronik 16 der entsprechenden Leuchten-Baugruppe 40 übertragen. Die auf der Hauptleiterplatte 6 befindliche Steuerelektronik 16 empfängt das Schaltsignal des Bedienelements 28 und steuert die bevorzugt ebenfalls auf der Hauptleiterplatte 6 befindlichen LEDs 5, 5a entsprechend an.

Ferner kann das Schaltsignal einer ersten Leuchten-Baugruppe 40 eines Leuchtensystems 50 über das Signalkabel 52 bzw. über Teile 35, 35a, 36 des Kabelbaum 35, 35a, 36, 37 an eine andere Leuchten-Baugruppe 40 des Leuchtensystems 50 übertragen werden. An der anderen Leuchten-Baugruppe 40 gelangt das Schaltsignal dann über die Anschlussbuchse 29 und die flexible Leiterplatte 10 zu der Hauptleiterplatte 6 und weiter zu der Steuerelektronik 16 der anderen Leuchten-Baugruppe 40. Somit kann die auf der Hauptleiterplatte 6 der anderen Leuchten-Baugruppe 40 befindliche Steuerelektronik 16 das Schaltsignal des Bedienelements 28 empfangen und die bevorzugt ebenfalls auf der Hauptleiterplatte 6 befindlichen LEDs 5, 5a der andere Leuchten-Baugruppe 40 entsprechend ansteuern.

Die flexible Leiterplatte 10 verläuft bevorzugt im Inneren des Lenkergriffs 31 der jeweiligen Leuchten-Baugruppe 40 aber außerhalb des Lenkerrohrs 32. Wie in Fig. 3 zu erkennen ist, wird insbesondere vorgeschlagen, dass an der Innenseite des Lenkergriffs 31 eine Längsnut 56 ausgebildet ist, die parallel zu der Längsachse des Lenkergriffs 31 bzw. des Lenkerrohrs 32 entlang des gesamten Länge des Lenkergriffs 31 in dem Griffgehäuse 25 verläuft. An der ersten Stirnseite des Lenkergriffs 31 mündet die Längsnut 56 in eine Öffnung 26, die in dem Griffgehäuse 25 ausgebildet ist. Die flexible Leiterplatte 10 der Bedienelement-Baugruppe 28 verläuft in der Längsnut 56 von der ersten Stirnseite bis zu der Leuchte 62 an der gegenüberliegenden Stirnseite. An der der ersten Stirnseite gegenüberliegenden, der Leuchte 62 zugewandten Stirnseite des Lenkergriffs 31 kann eine schlitzförmige Öffnung (nicht gezeigt) vorgesehen sein, durch die die flexible Leiterplatte 10 aus dem Lenkergriff 31 heraus zu der Leuchte 62 geführt wird.

In einer Grundfläche des Leuchtengehäuses 8, die der Stirnseite des Lenkergriffs 31 zugewandt ist, die der ersten Stirnseite gegenüberliegt, ist ein Durchlass 23 für die flexible Leiterplatte 10 ausgebildet. Ein distales Ende der flexiblen Leiterplatte 10 ist an einer Stelle 18 an der Hauptleiterplatte 6 kontaktiert. Dies kann an der dem Leuchtengehäuse 8 zugewandten Vorderseite der Haupteiterplatte 6 oder an deren Rückseite erfolgen, die von dem Leuchtengehäuse 8 abgewandt ist. Bei einer Kontaktierung der flexiblen Leiterplatte 10 an der Rückseite der Haupteiterplatte 6 kann an der Stelle 18 ein Durchgang für die flexible Leiterplatte 10 in der Haupteiterplatte 6 ausgebildet sein und kann die Kontaktierung auf der Rückseite über eine 90°-Lötverbindung erfolgen.

Bevorzugt wird die flexible Leiterplatte 10 der Bedienelement-Baugruppe 41 an der Öffnung 26 beim Eintritt in den Lenkergriff 31 und an der schlitzförmigen Öffnung und/oder dem Durchlass 23 des Leuchtengehäuses 8 beim Übergang von dem Lenkergriff 31 in die Leuchte 62 hermetisch dicht verklebt. Abschließend kann die Nut 56 des Lenkergriffs 31 mit einem Vergussmittel, bspw. einem 2-Komponenten Vergussmittel, wasserdicht ausgegossen werden (sog. potting). Durch den Verguss kann auch eine strukturelle Anbindung der Anschlussbuchse 29 (vgl. Fig. 8) und des Bedienelements 28 zu dem Lenkergriff 31 her und stellt neben einer Wasserdichtigkeit auch eine Vibrationsbeständigkeit der gesamten Leuchten-Baugruppe 40 sicher.

Ein elektrischer Anschluss der beiden Griff-Blinker-Einheiten 33, 33a mit einer Energiequelle des Fahrzeugs erfolgt über das Anschlusskabel 54 das als 2- poliges Kabel eine Versorgungsspannung von der Energiequelle zu der Verzweigung 36 leitet. In der Y-förmigen Verzweigung 36 ist bevorzugt eine Leiterplatte wasserdicht umspritzt, an deren Enden alle drei Kabelteile 35, 35a, 37 angelötet sind.

Die beiden von der Verzweigung 36 zu den Griff-Blinker-Einheiten 33, 33a abgehenden Anschlusskabel 35, 35a sind bevorzugt 3-polig ausgeführt. Zwei Leitungen der Kabel 35, 35a leiten die Versorgungsspannung über die Anschlussbuchse 29 die flexible Leiterplatte 10 der Bedienelement-Baugruppe 41 zu der Hauptleiterplatte 6 der Leuchte 62. Synchronisationssignale von der linken Griff-Blinker-Einheit 33 und der rechten Griff-Blinker-Einheit 33a werden jeweils über die dritte Leitung der Anschlusskabel 35, 35a zu der Verzweigung 36 geführt und auf der Verteilerleiterplatte miteinander verbunden.

Das Griffgehäuse 25 bildet ein stabiles, steifes Teil, über das die Griff-Blinker-Einheiten 33, 33a der Leuchten-Baugruppe 40 an einem distalen Ende des Lenkerrohrs 32 befestigt werden kann. Zu diesem Zweck ist in einem Umfang des Griffgehäuses 25 ein Klemmspalt 27 (vgl. Fig. 3) ausgebildet, der nach dem Aufsetzen der Leuchten-Baugruppe 40 als Einheit 31, 31a auf das Lenkerrohr 32 mittels einer Klemmschraube 39 verkleinert werden kann, sodass das Griffgehäuse 25 bei angezogener Schraube 39 klemmend auf dem Lenkerrohr 31 befestigt ist (vgl. Fign. 7 und 8). Das Griffgehäuse 25 erstreckt sich bevorzugt über die gesamte Länge des Lenkergriffs 31. Es besteht bevorzugt aus einem stabilen Kunststoff oder Metall, insbesondere Aluminium. Auf der Außenseite des Griffgehäuses 25 kann ein weicheres, gummiartiges Material des Griffteils 24 für eine bessere Haptik und für eine optimale Ergonomie für den Radfahrer aufgebracht sein. Bevorzugt ist der Lenkergriff 31 als ein 2-Komponenten Spritgussteil ausgebildet. Es wäre aber auch denkbar, das Griffteil 24 als Schlauch aus einem weicheren, elastischen, gummiartigen Material herzustellen und einfach in Längsrichtung über das Griffgehäuse 25 zu ziehen.

Die erfindungsgemäße Leuchten-Baugruppe 40 bzw. das Leuchtensystem 50 kann verschiedene Leuchtenfunktionen oder Teile davon erzeugen. Wenn eine Leuchten-Baugruppe 40 nur einen Teil einer Leuchtenfunktion erzeugt, kann die gewünschte Leuchtenfunktion zusammen mit dem Licht einer anderen Leuchte des Fahrrads erzeugt werden. Insbesondere wird vorgeschlagen, dass eine Leuchten-Baugruppe 40 zur Erzeugung der folgenden Leuchtenfunktionen ausgebildet ist:
- Positionslichtfunktion: nach dem Einschalten der Versorgungsspannung arbeitet die Leuchte 62 mit permanent konstanter und relativ geringer Leistung. Dadurch wird die Sichtbarkeit der Umrisse des Fahrzeugs für andere Verkehrsteilnehmer erhöht. Bei dieser Leuchtenfunktion wird bevorzugt weißes Licht ausgesandt.
- Fahrtrichtungsanzeigerfunktion: erst nach Betätigung des Bedienelements 28, z.B. einem Tasterdruck, blinkt die Leuchte 62 auf Befehl. Bei dieser Leuchtenfunktion wird bevorzugt amberfarbenes Licht ausgesandt. Während der Blinkerfunktion erlischt das Positionslicht auf der blinkenden Seite des Fahrzeugs oder auf beiden Seiten. Nach Beendigung der Blinkerfunktion senden die Leuchten 62, 62a auf beiden Seiten des Fahrzeugs wieder Positionslicht aus. Es wäre denkbar, über die Länge eines Tastendrucks verschiedene Blinkermodi abzubilden. So könnte bspw. bei einer Druckdauer des Tasters 28 von weniger als 1 s, bspw. für Spurwechsel, die Leuchte 62 nur 3 x Blinken und danach die Blinkerfunktion automatisch ausgeschaltet werden. Bei einer Druckdauer von länger als 1 s könnte ein Dauerblinken der Leuchte 62 aktiviert werden. Die Dauerblinkfunktion könnte bspw. durch Betätigen des Bedienelements 28a der gegenüberliegenden Leuchten-Baugruppe 40a oder durch nochmaliges Betätigen des Bedienelements 28, das die aktuelle Dauerblinkfunktion ausgelöst hat, beendet werden.
- Warnblinkerfunktion: die Leuchten 62, 62a von beiden Leuchten-Baugruppen 40, 40a eines Leuchtensystems 50 blinken synchron. Synchronisationssignale können über das Signalkabel 52 zwischen den gegenüberliegenden Leuchten-Baugruppen 40, 40a bzw. deren Leuchten 62, 62a bzw. deren Steuerelektroniken 16 ausgetauscht werden. Die Aktivierung und/oder Deaktivierung dieser Leuchtenfunktion könnte durch gleichzeitiges Betätigen beider Bedienelemente 28, 28a ausgelöst werden.

Zur Realisierung einer Blinker- und einer Positionslichtfunktion in einer Leuchte 62 einer Leuchten-Baugruppe 40 umfasst eine Lichtquelle 5, 5a der Leuchte 62 entweder zwei separate LEDs, wovon eine weißes Licht und die andere amberfarbenes Licht aussenden kann. Alternativ kann die Lichtquelle 5, 5a der Leuchte 62 auch nur eine RGB-LED mit drei LED-Chips umfassen, die rotes, grünes und blaues Licht aussenden können. Eine geeignete Ansteuerung der LED-Chips zur Variation der Intensität des ausgesandten roten, grünen und blauen Lichts führt durch Überlagerung zu dem gewünschten von der Leuchte 62 ausgesandten amberfarbenen oder weißen Licht.

Durch die zusätzliche Bestückung der Hauptleiterplatte 6 der Leuchte 62 mit weiteren Lichtquellen 5, 5a, die Licht in anderen Farben (bspw. rot) aussenden können oder eine entsprechende Ansteuerung der LED-Chips einer RGB-LED, können zusätzliche Leuchtenfunktionen (bspw. Rücklicht oder Bremslicht) realisiert werden. Dabei kann die Leuchte 62 in Fahrtrichtung ein dauerhaftes Positionslicht und entgegen der Fahrtrichtung ein dauerhaftes Rücklicht und bei Bedarf während eines Bremsvorgangs temporär ein Bremslicht aussenden. In diesem Fall würde die Lichtquelle 5a weißes Licht im Zusammenwirken mit der Optikbaugruppe 2 in Fahrtrichtung des Fahrrads aussenden und die Lichtquelle 5 rotes Licht im Zusammenwirken mit der Optikbaugruppe 2 entgegen der Fahrtrichtung. Wenn eine Blinklichtfunktion oder eine Warnblinkerfunktion aktiviert wird, können sowohl das Positionslicht als auch das Rücklicht und Bremslicht vorrübergehend deaktiviert werden.

Die Hauptleiterplatte 6 der Leuchte 62 könnte auch mit einer Lichtquelle bestückt werden, die blaues Licht aussendet. Dadurch könnten bspw. bei Fahrrädern, die von Ordnungskräften oder Rettungsdiensten verwendet werden, Blaulicht-Blitzer realisiert werden, um deren Sichtbarkeit im Straßenverkehr zu erhöhen. Ebenso könnte die Hauptplatine 6 mit einem Piezo-Lautsprecher bestückt werden, der die optischen Blaulicht-Blitzer durch ein Martinshorn oder eine Sirene akustisch unterstützen kann. Auch andere Sonder-Leuchtenfunktionen der Leuchten-Baugruppe 40 wären denkbar.

Die Hauptleiterplatte 6 der Leuchte 62 könnte auch mit einem Beschleunigungssensor (sog. G-Sensor) bestückt werden, bspw. als SMD-Bauteil oder auf andere Weise, der negative Beschleunigungen in Folge eines Bremsvorgangs detektiert und ein entsprechendes Sensorsignal an die Steuerelektronik 16 übermittelt, die dann eine Aktivierung des Bremslichts veranlasst. Ebenso können durch Modifikation der Programmierung der Steuerelektronik 16 bzw. des Mikrocontrollers weitere, zusätzliche Leuchtenfunktionen implementiert werden.

Denkbar wäre bspw. eine erschütterungsgesteuerte Blinker-Abschaltung, bei der ein gesetzter Blinker bei stehendem Fahrzeug kontinuierlich blinkt und sich automatisch ausschaltet, sobald oder kurz nachdem sich das Fahrzeug in Bewegung gesetzt hat. Eine Bewegung des Fahrzeugs kann durch Erfassen von Erschütterungen mittels eines G-Sensors detektiert werden. Bevorzugt wird der Blinker nach einer vorgebbaren Zeitdauer automatisch abgeschaltet, nachdem sich das Fahrzeug in Bewegung gesetzt hat.

## Patentansprüche

1. Leuchten-Baugruppe (40; 40a), die zur Montage an einem Fahrrad, insbesondere an einem E-Bike, und zur Realisierung einer Leuchtenfunktion oder eines Teils davon ausgebildet ist,
**dadurch gekennzeichnet, dass**
die Leuchten-Baugruppe (40; 40a) einen zur Montage an einem Lenkerende eines Lenkerrohrs (32) des Fahrrads vorgesehenen Lenkergriff (31; 31a), eine Leuchte (62; 62a) mit mindestens einer Lichtquelle (5, 5a), insbesondere einer Halbleiterlichtquelle, eine Steuerelektronik (16) zur Ansteuerung der mindestens einen Lichtquelle (5, 5a) und zur Realisierung der Leuchtenfunktion und ein Bedienelement (28; 28a), insbesondere einen Taster, zur Ansteuerung der mindestens einen Lichtquelle (5, 5a) als integrale Einheit umfasst und zur Montage an dem Lenkerende als Einheit (33; 33a) ausgebildet ist.

2. Leuchten-Baugruppe (40; 40a) nach Anspruch 1, wobei
der Lenkergriff (31; 31a) eine im Wesentlichen hohlzylinderförmige Form und an einer ersten Stirnseite eine Öffnung zur Aufnahme eines distalen Endes eines Lenkerendes des Lenkerrohrs (32) des Fahrrads aufweist, wobei die Leuchte (62; 62a) an einer der ersten Stirnseite gegenüberliegenden zweiten Stirnseite des Lenkergriffs (31; 31a) angeordnet ist.

3. Leuchten-Baugruppe (40; 40a) nach Anspruch 1 oder 2, wobei
der Lenkergriff (31; 31a) eine im Wesentlichen hohlzylinderförmige Form und an einer ersten Stirnseite eine Öffnung zur Aufnahme eines distalen Endes eines Lenkerendes des Lenkerrohrs (32) des Fahrrads aufweist, wobei das Bedienelement (28; 28a) an einer Umfangsfläche des Lenkergriffs (31; 31a) im Bereich der ersten Stirnseite des Lenkergriffs (31; 31a) angeordnet ist.

4. Leuchten-Baugruppe (40; 40a) nach einen der vorhergehenden Ansprüche, wobei
die Steuerelektronik (16) einen Mikrocontroller umfasst, auf dem ein Computerprogramm ablauffähig ist, das programmiert ist, die Ansteuerung der mindestens einen Lichtquelle (5, 5a) und die Leuchtenfunktion zu realisieren, wenn es auf dem Mikrocontroller abläuft.

5. Leuchten-Baugruppe (40; 40a) nach Anspruch 4, wobei
der Mikrocontroller und die mindestens eine Lichtquelle (5, 5a) auf einer gemeinsamen Hauptleiterplatte (6) der Leuchte (62; 62a) angeordnet und elektrisch kontaktiert sind.

6. Leuchten-Baugruppe (40; 40a) nach einem der vorhergehenden Ansprüche, wobei
die Leuchte (62; 62a) mindestens eine Optikbaugruppe (2; 2a) aufweist, die ausgebildet ist, von der mindestens einen Lichtquelle (5, 5a) in eine Hauptabstrahlrichtung (64) ausgesandtes Licht zu bündeln und/oder in mindestens eine Hauptleuchtrichtung (66) der Leuchtfunktion umzulenken, wobei die Optikbaugruppe (2; 2a) bevorzugt ein massives lichtdurchlässiges Material umfasst, in das das von der mindestens einen Lichtquelle (5, 5a) in die Hauptabstrahlrichtung (64) ausgesandte Licht einkoppelt und das mindestens eine Grenzfläche (3, 3a) umfasst, die ausgebildet ist, das eingekoppelte Licht beim Auftreffen auf die Grenzfläche (3, 3a) mittels Totalreflexion in die Hauptleuchtrichtung (66) umzulenken.

7. Leuchten-Baugruppe (40; 40a) nach Anspruch 6, wobei
die Optikbaugruppe (2; 2a) ausgebildet ist, von der mindestens einen Lichtquelle (5, 5a) in die Hauptabstrahlrichtung (64) ausgesandtes Licht in zwei entgegengesetzt zueinander gerichtete Hauptleuchtrichtungen (66) umzulenken, wobei eine der Hauptleuchtrichtungen (66) bevorzugt in Fahrtrichtung eines mit der Leuchten-Baugruppe (40; 40a) versehenen Fahrrads und die andere Hauptleuchtrichtung (66) entgegengesetzt zu der Fahrtrichtung des Fahrrads gerichtet ist.

8. Leuchten-Baugruppe (40; 40a) nach Anspruch 7, wobei
die Leuchte (62; 62a) mindestens zwei zueinander beabstandet angeordnete Lichtquellen (5, 5a) aufweist, wobei eine der Lichtquellen (5a) zum Aussenden von Licht ausgebildet ist, das nach dem Umlenken durch die Optikbaugruppe (2; 2a) in die Fahrtrichtung des Fahrrads gerichtet ist, und die andere Lichtquelle (5) zum Aussenden von Licht ausgebildet ist, das nach dem Umlenken durch die Optikbaugruppe (2; 2a) entgegengesetzt zu der Fahrtrichtung des Fahrrads gerichtet ist.

9. Leuchten-Baugruppe (40; 40a) nach einem der vorhergehenden Ansprüche, wobei
die mindestens eine Lichtquelle (5,5a) ausgebildet ist, amberfarbenes Licht auszusenden, sodass die von der Leuchten-Baugruppe (40; 40a) realisierte Leuchtenfunktion eine Fahrtrichtungsanzeiger-Funktion und/oder eine Positionslicht-Funktion umfasst.

10. Leuchten-Baugruppe (40; 40a) nach Anspruch 9, wobei
die Leuchte (62; 62a) mindestens eine weitere Lichtquelle umfasst, die ausgebildet ist, Licht einer anderen Farbe auszusenden als die mindestens eine Lichtquelle (5, 5a), wobei das von der mindestens einen weiteren Lichtquelle ausgesandte Licht entweder alleine oder durch Überlagerung mit dem von der mindestens einen Lichtquelle (5, 5a) ausgesandten Licht weißes Licht ist, sodass die von der Leuchten-Baugruppe (40; 40a) realisierte Leuchtenfunktion eine Positionslicht-Funktion umfasst.

11. Leuchten-Baugruppe (40; 40a) nach Anspruch 9 oder 10, wobei
die Leuchte (62; 62a) mindestens noch eine weitere Lichtquelle umfasst, die ausgebildet ist, rotes Licht auszusenden, sodass die von der Leuchten-Baugruppe (40; 40a) realisierte Leuchtenfunktion eine Rücklicht-Funktion und/oder eine BremslichtFunktion umfasst.

12. Leuchten-Baugruppe (40; 40a) nach einem der vorhergehenden Ansprüche, wobei
das Bedienelement (28; 28a) derart in der Leuchten-Baugruppe (40; 40a) angeordnet und ausgebildet ist, bei an dem Lenkerende des Lenkerrohrs (32) des Fahrrads montierter Leuchten-Baugruppe (40; 40a) durch einen Finger oder Daumen eines Fahrers des mit der Leuchten-Baugruppe (40; 40a) versehenen Fahrrads betätigt zu werden, um in Abhängigkeit von der Betätigung des Bedienelements (28; 28a) durch den Fahrer die Leuchtenfunktion zu aktivieren und/oder zu deaktivieren, oder eine von mehreren durch die Leuchten-Baugruppe (40; 40a) realiserbaren Leuchtenfuntkionen auszuwählen.

13. Leuchten-Baugruppe (40; 40a) nach einem der vorhergehenden Ansprüche, wobei
die Leuchte (62; 62a) eine Hauptleiterplatte (6), auf der die mindestens eine Lichtquelle (5, 5a) angeordnet und elektrisch kontaktiert ist, und ein Metallgehäuse (8) umfasst, wobei die Hauptleiterplatte (6) thermisch an das Metallgehäuse (8) angebunden ist, sodass während des Betriebs der Leuchten-Baugruppe (40; 40a) entstehende Verlustwärme über das Metallgehäuse (8) an die Umgebung abstrahlt, wobei die thermische Anbindung der Hauptleiterplatte (6) zu dem Metallgehäuse (8) bevorzugt über eine wärmeleitende Klebeverbindung (9) erfolgt.

14. Leuchtensystem (50), das zur Montage an einem Fahrrad, insbesondere an einem E-Bike, und zur Realisierung einer Leuchtenfunktion ausgebildet ist,
**dadurch gekennzeichnet, dass**
das Leuchtensystem (50) zwei Leuchten-Baugruppen (40, 40a) nach einem der vorhergehenden Ansprüche umfasst, wobei eine der Leuchten-Baugruppen (40) zur Montage als integrale Einheit (33) an einem ersten Lenkerende eines Lenkerrohrs (32) des Fahrrads und die andere Leuchten-Baugruppe (40a) zur Montage als integrale Einheit (33a) an einem dem ersten Lenkerende gegenüberliegenden zweiten Lenkerende des Lenkerrohrs (32) ausgebildet ist.

15. Leuchtensystem (50) nach Anspruch 14, wobei
das Leuchtensystem (50) ein elektrisches Signalkabel (52; 35, 35a, 36) zwischen den Leuchten-Baugruppen (40, 40a) aufweist, das ausgebildet ist, zwischen den Leuchten-Baugruppen (40, 40a) Synchronisationssignale zur Synchronisation der durch die Leuchten-Baugruppen (40, 40a) jeweils erzeugten Leuchtenfunktionen zu übertragen, und/oder
das Leuchtensystem (50) ein elektrisches Anschlusskabel (54; 35, 35a, 36, 37) zwischen den Leuchten-Baugruppen (40, 40a) einerseits und einer Energiequelle des Fahrrads andererseits aufweist, das ausgebildet ist, von der Energiequelle elektrische Energie zum Betrieb der Leuchten-Baugruppen (40, 40a) an diese zu übertragen.
